(19) Europäisches Patentamt
European Patent Office
Office européen des brevets

(11) EP 1 225 540 A2

(12) # EUROPEAN PATENT APPLICATION

(43) Date of publication:
**24.07.2002 Bulletin 2002/30**

(51) Int Cl.[7]: **G06T 1/00**

(21) Application number: **02001106.0**

(22) Date of filing: **23.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.01.2001 JP 2001014776**

(71) Applicant: **VICTOR COMPANY OF JAPAN, LIMITED**
**Yokohama-Shi Kanagawa-Ken 221 (JP)**

(72) Inventors:
- **Nishitani, Masayoshi**
  **Yokosuka-shi, Kanagawa-ken (JP)**
- **Sugahara, Takayuki**
  **Kanagawa-ken (JP)**

(74) Representative: **HOFFMANN - EITLE**
**Patent- und Rechtsanwälte**
**Arabellastrasse 4**
**81925 München (DE)**

(54) **Digital watermarking apparatus and its method and digital watermark reproducing apparatus and its method**

(57) An encryption mixer (3) transforms the intensity values of image signals in a predetermined area, specified by an area specifier (1), based on encryption data from an encryption data generator (2). To do so, for an odd-numbered line and an even-nuinbered line in the predetermined area, the encryption mixer (3) calculates the average of the intensity values of the image signals in the even-numbered line and compares the average with the intensity value of each pixel in the odd-numbered line. The encryption mixer (3) increments $CNT_{posi}$ by 1 when the average is smaller, and increments $CNT_{nega}$ by 1 when the average is larger. Then, the encryption mixer (3) modifies the intensity values of the image signals in the odd-numbered line such that $CNT_{posi} > CNT_{nega}$ when the bit to be embedded is "1" and such that $CNT_{posi} < CNT_{nega}$ when the bit to be embedded is "0".

FIG.1

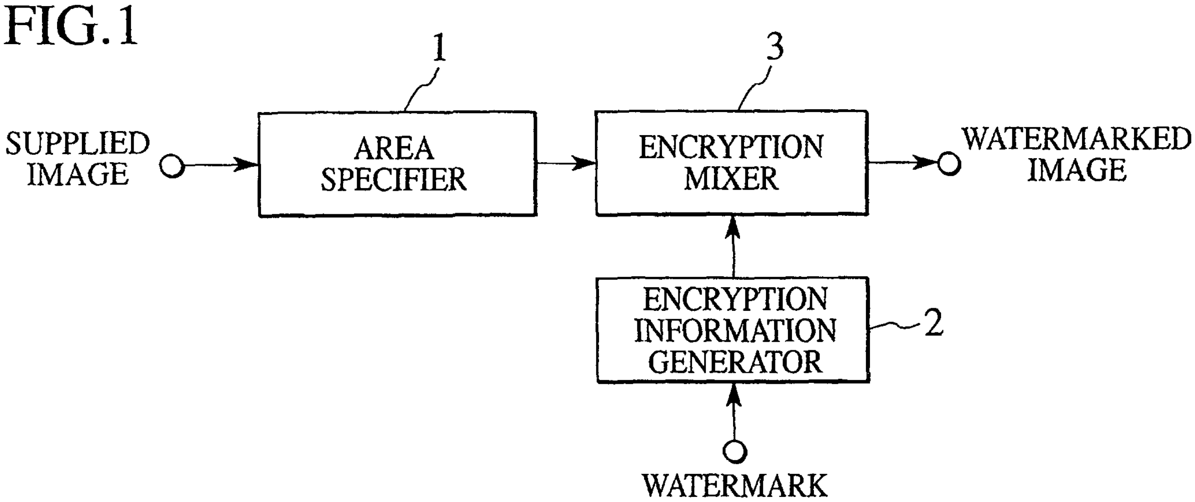


EP 1 225 540 A2

## Description

BACKGROUND OF THE INVENTION

1. Field of the Invention

The present invention relates to a digital watermarking apparatus and its method and a digital watermark reproducing apparatus and its method. More particularly, the present invention relates to a digital watermarking apparatus and its method, which embed a digital watermark into image data, audio data, and multimedia data, and a digital watermark reproducing apparatus and its method, which reproduce a digital watermark from digitally watermarked input data, in order to claim a copyright, to identify a copyright infringement, and to send hidden messages.

2. Description of the Related Art

The digital watermarking technology embeds information into multimedia data, such as image and audio data, to allow the multimedia data to include hidden information. Many methods have been in use. One of conventional digital watermarking methods is that the DCT coefficients, motion vectors, or quantization characteristics in the MPEG-coded code are changed to embed a digital watermark.

Another conventional digital watermarking method is that image signals are spread with the use of a PN (Pseudorandom Number) sequence according to the direct spread method to combine signature information into an image. When image signals including a signature are de-spread in this conventional method, the signature information is spread over the entire image signals. Because the spread signal is very weak, it does not cause much noise to the image signals and therefore the image signals including the signature information are apparently the same as the original image. To identify the signature information, the image signals must be spread with the spread code to detect the signature information signal.

One of the problems with the conventional digital watermarking methods described above is that watermarking and sending images require high costs and much time in transforming the images. Another problem is that watermarking the transformation coefficients calculated using the orthogonal transform, such as DCT (Discrete Cosine Transform), sometimes results in the loss of a watermark even when a simple low-pass filter is used.

SUMMARY OF THE INVENTION

In view of the foregoing, it is an object of the present invention to provide a digital watermarking apparatus and its method that allow the user to digitally watermark images easily and a digital watermark reproducing apparatus and its method.

It is another object of the present invention to provide a digital watermarking apparatus and its method and a digital watermark reproducing apparatus and its method that record and reproduce a filter-tolerant watermark.

To solve the above problems, there is provided a digital watermarking apparatus comprising: area specifying means for specifying a predetermined area in which a digital watermark is to be embedded, the predetermined area being included in received image signals; encryption data generating means for encrypting the digital watermark and for outputting encryption data; and mixing means for comparing an average of intensity values or color difference values of all pixels in a first area in the predetermined area in the received image signals with an intensity value or a color difference value of each pixel in a second area that is an area other than the first area in the predetermined area to find, for all pixels in the second area, a first counter value and a second counter value, the first counter value indicating a number of pixels each of which has an intensity value or a color difference value larger than the average, the second counter value indicating a number of pixels each of which has an intensity value or a color difference value smaller than the average, for transforming the intensity value or the color difference value of each pixel in the second area such that a relation between the first counter value and the second counter value becomes a preset relation according to a first value or a second value of the encryption data from the encryption data generating means, and for outputting the received image signals as watermarked image signals.

The apparatus according to the present invention transforms the intensity values or color difference values of the pixels in the second area of the predetermined area of the input image signals according to the encryption information produced by encrypting a digital watermark and outputs watermarked image signals. Therefore, with the adjacent image lines specified as the first and the second areas, a digital watermark may be embedded by taking full advantage of the nature that the correlation between adjacent lines is very high.

In a preferred embodiment of the present invention, the mixing means comprises: average calculating means for calculating the average of the intensity values or the color difference values of the pixels in the first area in the predetermined area of the received image signals; counter value calculating means for comparing the average with the intensity value or the color difference value of each pixel in the second area that is an area other than the first area in the predetermined area to calculate, for all pixels in the second area, the first counter value and the second counter value, the first counter value indicating the number of pixels each of which has an intensity value or a color difference value larger than the average, the second counter value indicating the number of pixels each of which has an intensity value or a color difference value smaller than the average; counter value comparing means for comparing the first counter value and the second counter value; and transforming means for transforming the intensity values or the color difference values of all pixels in the second area such that , when the value of the encryption data from the encryption generating means is the first value, the counter value comparing means gives a comparison result indicating that the first counter value is larger than the second counter value and such that, when the value of the encryption data from the encryption generating means is the second value, the counter value comparing means gives a comparison result indicating that the first counter value is smaller than the second counter value, wherein the transformed signals are output as the watermarked image signals, the intensity value or the color difference value or each pixel in the second area of the transformed signals being transformed by the transforming means according to the value of the encryption data.

To solve the above problems, there is provided a digital watermarking method comprising: a first step for specifying a predetermined area in which a digital watermark is to be embedded, the predetermined area being included in received image signals; a second step for encrypting the digital watermark and for outputting encryption data; and a third step for comparing an average of intensity values or color difference values of all pixels in a first area in the predetermined area in the received image signals with an intensity value or a color difference value of each pixel in a second area that is an area other than the first area in the predetermined area to find, for all pixels in the second area, a first counter value and a second counter value, the first counter value indicating a number of pixels each of which has an intensity value or a color difference value larger than the average, the second counter value indicating a number of pixels each of which has an intensity value or a color difference value smaller than the average, and a fourth step for transforming the intensity value or the color difference value of each pixel in the second area such that a relation between the first counter value and the second counter value becomes a preset relation according to a first value or a second value of the encryption data and for outputting the received image signals as watermarked image signals.

The method according to the present invention transforms the intensity values or color difference values of the pixels in the second area of the predetermined area of the input image signals according to the encryption information produced by encrypting a digital watermark and outputs watermarked image signals. Therefore, with the adjacent image lines specified as the first and the second areas, a digital watermark may be embedded by taking full advantage of the nature that the correlation between adjacent lines is very high.

In a preferred embodiment of the present invention, the third step comprises: a fifth step for calculating the average of the intensity values or the color difference values of the pixels in the first area in the predetermined area of the received image signals; and a sixth step for comparing the average with the intensity value or the color difference value of each pixel in the second area that is an area other than the first area in the predetermined area to calculate, for all pixels in the second area, the first counter value and the second counter value, the first counter value indicating the number of pixels each of which has an intensity value or a color difference value larger than the average, the second counter value indicating the number of pixels each of which has an intensity value or a color difference value smaller than the average, and the fourth step comprises: a seventh step for comparing the first counter value and the second counter value; and an eighth step for transforming the intensity values or the color difference values of all pixels in the second area such that, when the value of the encryption data is the first value, a comparison result indicating that the first counter value is larger than the second counter value is obtained and such that, when the value of the encryption data is the second value, a comparison result indicating that the first counter value is smaller than the second counter value is obtained.

To solve the above problems, there is provided a digital watermark reproducing apparatus comprising: area specifying means for receiving digitally watermarked image signals as input signals and for specifying a predetermined area, the digitally watermarked image signals being generated by transforming signals in the predetermined area of the image signals according to a value of encryption data generated by encrypting a digital watermark; extracting means for comparing an average of intensity values or color difference values of all pixels in a first area in the predetermined area in the digitally watermarked image signals with an intensity value or a color difference value of each pixel in a second area that is an area other than the first area in the predetermined area to find, for all pixels in the second area, a first counter value and a second counter value, the first counter value indicating a number of pixels each of which has an intensity value or a color difference value larger than the average, the second counter value indicating a number of pixels each of which has an intensity value or a color difference value smaller than the average, and for extracting from the predetermined area the encryption data which is determined to be a first value or a second value according to a relation between the first counter value and the second counter value; and a decrypting means for decrypting the extracted the encryption data to an original watermark for output.

The apparatus according to the present invention extracts the encryption data from the predetermined area of the watermarked image signals, generated by transforming the signals (intensity values and color difference values of the pixels in the second area) in the predetermined area of the image signals and then decrypts the encryption data. Therefore, the digital watermark may be reproduced.

In a preferred embodiment of the present invention, the extracting means comprises: average calculating means for calculating the average of the intensity values or the color difference values of the pixels in the first area in the predetermined area of the digitally watermarked image signals ; counter value calculating means for comparing the average with the intensity value or the color difference value of each pixel in the second area that is an area other than the first area in the predetermined area to calculate, for all pixels in the second area, the first counter value and the second counter value, the first counter value indicating the number of pixels each of which has an intensity value or a color difference value larger than the average, the second counter value indicating the number of pixels each of which has an intensity value or a color difference value smaller than the average; counter value comparing means for comparing the first counter value and the second counter value; and encryption data extracting means for extracting the encryption data determined to be the first value when the counter value comparing means gives a comparison result indicating that the first counter value is larger than the second counter value or for extracting the encryption data determined to be the second value when the counter value comparing means gives a comparison result indicating that the first counter value is smaller than the second counter value.

To solve the above problems, there is provided a digital watermark reproducing method comprising: a first step for receiving digitally watermarked image signals as input signals and for specifying a predetermined area, the digitally watermarked image signals being generated by transforming signals in the predetermined area of the image signals according to a value of encryption data generated by encrypting a digital watermark; a second step for comparing an average of intensity values or color difference values of all pixels in a first area in the predetermined area in the digitally watermarked image signals with an intensity value or a color difference value of each pixel in a second area that is an area other than the first area in the predetermined area to find, for all pixels in the second area, a first counter value and a second counter value, the first counter value indicating a number of pixels each of which has an intensity value or a color difference value larger than the average, the second counter value indicating a number of pixels each of which has an intensity value or a color difference value smaller than the average; a third step for extracting from the predetermined area the encryption data which is determined to be a first value or a second value according to a relation between the first counter value and the second counter value; and a fourth step for decrypting the extracted encryption data to an original watermark for output.

The method according to the present invention extracts the encryption data from the predetermined area of the watermarked image signals, generated by transforming the signals (intensity values and color difference values of the pixels in the second area) in the predetermined area of the image signals, and then decrypts the encryption data. Therefore, the digital watermark may be reproduced.

In a preferred embodiment of the present invention, the second step comprises: a fifth step for calculating the average of the intensity values or the color difference values of the pixels in the first area in the predetermined area of the digitally watermarked image signals; and a sixth step for comparing the average with the intensity value or the color difference value of each pixel in the second area that is an area other than the first area in the predetermined area to calculate, for all pixels in the second area, the first counter value and the second counter value, the first counter value indicating the number of pixels each of which has an intensity value or a color difference value larger than the average, the second counter value indicating the number of pixels each of which has an intensity value or a color difference value smaller than the average, and the third step comprise: a seventh step for comparing the first counter value and the second counter value; and an eighth step for extracting the encryption data determined to be the first value when the seventh step gives a comparison result indicating that the first counter value is larger than the second counter value or for extracting the encryption data determined to be the second value when the seventh step gives a comparison result indicating that the first counter value is smaller than the second counter value.

The nature, principle and utility of the invention will become more apparent from the following detailed description when read in conjunction with the accompanying drawings.

BRIEF DESCRIPTION OF THE DRAWINGS

In the accompanying drawings:

FIG.1 is a block diagram showing an embodiment of a recorder of an apparatus according to the present invention;
FIG.2 is a block diagram showing an embodiment of a reproducer of the apparatus according to the present invention;
FIG.3 is a diagram showing an example of predetermined area in which encrypts according to the present invention are mixed.

DESCRIPTION OF THE PREFERRED EMBODIMENTS

Next, an embodiment according to the present invention will be described below with reference to the drawings . FIG.1 is a block diagram showing an embodiment of a recorder of a digital watermark recording/reproducing apparatus according to the present invention.

Referring to the figure, image signals are supplied to an area specifier 1, where an area in which a digital watermark is to be embedded is determined.

On the other hand, an encryption information generator 2 encrypts a digital watermark to be embedded in the image signals. An example of simple encryption is that, when ASCII characters each represented by one byte (eight bits) are sent, eight bits may be sequentially sent, one bit at a time. Alternatively, if compatibility with a decryptor 6 of a digital watermark reproducer in FIG.2, which will be described later, is maintained, information is coded using a table such as the Huffman table and then is sent, one bit at a time.

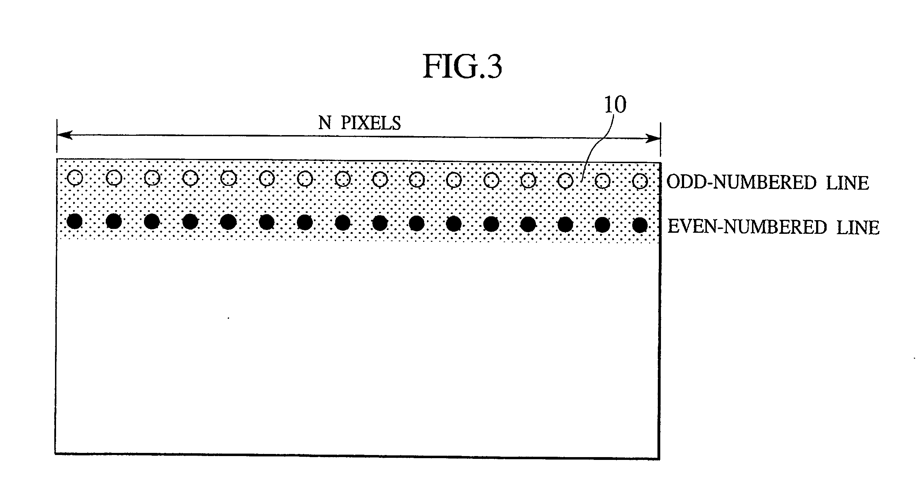

An encryption mixer 3 transforms the intensity values of the image signals of a predetermined area, specified by the specifier 1, based on the encryption information sent from the encryption information generator 2. In the example, the top two-line area 10 of the image signals, the shaded area in FIG.3, is a predetermined area (In FIG.3, a circle indicates a pixel in an odd-numbered line, and a bullet indicates a pixel in an even-numbered line). The number of effective pixels in one line of image signals is N.

First, for the odd-numbered line and the even-numbered line in the predetermined area 10, the average value $P_{AVE}$(EVEN) of the intensity values of the image signals in the even-numbered line is calculated by the following expression:

$$P_{AVE}(EVEN) = \frac{1}{N}\sum_{i=1}^{N} Pi(EVEN) \quad (i=1,\ 2,\ 3,\ ...,N) \quad ...(1)$$

where, Pi(EVEN) in expression (1) indicates the intensity value of each image signal in the even-numbered line in the predetermined area 10.

Next, the calculated average value $P_{AVE}$(EVEN) of the intensity values of the image signals in the even-numbered line is compared with the intensity value Pi(ODD) of each image signal in the odd-numbered line in the predetermined area 10. If the following inequality is satisfied,

$$Pi(ODD)-P_{AVE}(EVEN)>0 \qquad (i=1,\ 2,\ ...N) \qquad (2)$$

then, the positive counter $CNT_{posi}$ is incremented by 1. Conversely, if the following inequality is satisfied,

$$Pi(ODD)-P_{AVE}(EVEN)<0 \qquad (i=1,\ 2,\ ...N) \qquad (3)$$

then, the negative counter $CNT_{nega}$ is incremented by 1.

This comparison is made for all the intensity values of the pixels in the odd-numbered line in the predetermined area.

The meaning of an encryption information bit recorded by the digital watermark information recorder and reproduced by the digital watermark information reproducer is defined in advance. In this embodiment, if the value of a bit of encryption information to be embedded is "1", the intensity values of the image signals in the odd-numbered line are modified such that

$$CNT_{posi} > CNT_{nega} \qquad (4)$$

and, if the value of a bit of encryption information to be embedded is "0", the intensity values of the image signals in the odd-numbered line are modified such that

$$CNT_{posi} < CNT_{nega} \qquad (5)$$

To satisfy expression (4) (that is, to embed the encryption information bit "1"), the intensity level is increased by 1 for each intensity value of the image signals in the odd-numbered line. Then, the intensity value of each image signal in the odd-numbered line is compared again with the average $P_{AVE}$(EVEN) of the intensity values of the image signals in the even-numbered line. If expression (4) is satisfied, processing ends. However, if expression (4) is not yet satisfied, the intensity level is increased again by 1 for each intensity value of the image signals in the odd-numbered line. Then, the intensity value of each image signal in the odd-numbered line is compared again with the average $P_{AVE}$ (EVEN) of the intensity values of the image signals in the even-numbered line. This is repeated until expression (4) is satisfied.

Similarly, to embed the encryption information bit "0", the intensity level is decreased by 1 for each intensity value of the image signals in the odd-numbered line. Then, the intensity value of each image signal in the odd-numbered line is compared again with the average $P_{AVE}$(EVEN) of the intensity values of the image signals in the even-numbered line. This is repeated until expression (5) is satisfied.

Because the correlation between adjacent lines is very high, the method described above modifies the intensity level only by a small value. Therefore, from the viewpoint of visual characteristics, the method makes the image quality degradation unrecognizable, thus easily making it possible to embed encryption information. In this way, the intensity values of the pixels in the odd-numbered line in the predetermined area are modified based on the encryption information bit, and then the image signals are output from the encryption mixer 3 as digitally watermarked image signals. Those signals are then recorded on a recording medium by known recording means not shown.

Next, the configuration and the operation of the reproducer according to the present invention will be described. FIG.2 is a block diagram showing an embodiment of the reproducer of the digital watermark recording/reproducing apparatus according to the present invention. In the figure, digitally watermarked image signals reproduced from a recording medium by known reproducing means are input into an area specifier 4, where a watermarked area compatible with the area specifier 1 of the digital watermark recorder is specified.

An encryption information extractor 5 extracts encryption information from image data of the area specified by the specifier 4 according to the procedure similar to the one used by the encryption mixer 3. That is, the average of the intensity values of the image signals in the even-numbered line in the predetermined area specified by the specifier 4 is calculated first. Next, the average of the intensity values of the image signals in this even-numbered line is compared with the intensity value of each image signal in the odd-numbered line in the predetermined area. If the average of the intensity values of the image signals in the even-numbered line is larger than the intensity value in the odd-numbered line, the counter Cnt(EVEN) is incremented by 1; if the average of the intensity values of the image signals in the even-numbered line is smaller than the intensity value in the odd-numbered line, the counter Cnt(ODD) is incremented by 1.

In this way, the intensity values of all pixels in the odd-numbered line in the predetermined area are each compared with the average of the intensity values of the image signals in the even-numbered line. If Cnt(ODD) > Cnt (EVEN) as a result of comparison, the encryption information bit "1" is obtained; conversely, if Cnt(ODD) < Cnt(EVEN), the encryption information bit "0" is obtained. The encryption information thus obtained is sent to the decryptor 6, and the signals are decoded to produce the original watermark. Because the predetermined area contains adjacent image lines in this embodiment, the apparatus in this embodiment records and reproduces a digital watermark that is tolerant to band-limited means such as a horizontal filter.

It is to be understood that the present invention is not limited to the specific embodiment described above. For example, although digitally watermarked image signals, that is, watermarked images, are recorded on, and reproduced from, a recording medium in the above embodiment, the watermarked images may be distributed over the Internet, cable, or radio waves and then the distributed watermarked images may be received for reproduction of the watermarked images.

In addition, although the intensity values of the image signals in an odd-numbered line are modified in the encryption mixer 3 or the encryption information extractor 5 in the above embodiment, the intensity values of the image signals in an even-numbered line may be modified.

In addition, the predetermined area of image signals in which a watermark is mixed is composed of consecutive two lines in the above embodiment, any rectangular area or an area in any special shape may be used as long as compatibility is maintained between the area specifier 1 and the area specifier 4. In this case, encryption information mixing and extraction, if performed with an odd-numbered line and an even-numbered line in the area as a pair as described above, enable one or more bits of encryption information to be sent. In addition, comparing the average of the intensity values in any one line in the area with the intensity values in the remaining lines enables encryption information to be mixed or extracted.

Furthermore, as long as the area specifier 1 and the area specifier 4 are compatible, a plurality of predetermined areas of image signals, in which a watermark is mixed, may be provided in the image. The encryption method used in the encryption information generator 2 may be also any encryption method as long as the method is compatible with the decryptor 6. Instead of modifying intensity values, the average of color difference values of the pixels in a specific area within the predetermined area may be compared with the color difference values of pixels in the area other than the specific area and, based on the comparison result, a digital watermark may be embedded the image signals.

As described above, the apparatus and the method according to the present invention transform the signals in the predetermined area of the input image signals according to the encryption information produced by encrypting a digital watermark. When outputting digitally watermarked image signals, the adjacent image lines are specified as the predetermined area to embed a digital watermark into the images by taking full advantage of the nature that the correlation between adjacent lines is very high. This method therefore modifies, to a small degree, the intensity values or color difference values of the predetermined area according to the value of encryption information, makes the image quality degradation unrecognizable and, therefore, allows a digital watermark to be embedded easily.

In addition, the apparatus and the method according to the present invention make digital watermarking and its reproduction tolerant to band-limited means, such as a horizontal filter, especially when the predetermined area contains image lines.

It should be understood that many modifications and adaptations of the invention will become apparent to those skilled in the art and it is intended to encompass such obvious modifications and changes in the scope of the claims appended hereto.

## Claims

**1.** A digital watermarking apparatus comprising:

area specifying means (1) for specifying a predetermined area in which a digital watermark is to be embedded, said predetermined area being included in received image signals;
encryption data generating means (2) for encrypting the digital watermark and for outputting encryption data; and
mixing means (3) for comparing an average of intensity values or color difference values of all pixels in a first area in the predetermined area in the received image signals with an intensity value or a color difference value of each pixel in a second area that is an area other than the first area in the predetermined area to find, for all pixels in the second area, a first counter value and a second counter value, said first counter value indicating a number of pixels each of which has an intensity value or a color difference value larger than the average, said second counter value indicating a number of pixels each of which has an intensity value or a color difference value smaller than the average, for transforming the intensity value or the color difference value of each pixel in the second area such that a relation between the first counter value and the second counter value becomes a preset relation according to a first value or a second value of the encryption data from said encryption data generating means (2), and for outputting the received image signals as watermarked image signals.

**2.** The digital watermarking apparatus according to claim 1, wherein said mixing means (3) comprises:

average calculating means for calculating the average of the intensity values or the color difference values of the pixels in the first area in the predetermined area of the received image signals;
counter value calculating means for comparing the average with the intensity value or the color difference value of each pixel in the second area that is an area other than the first area in the predetermined area to calculate, for all pixels in the second area, the first counter value and the second counter value, said first counter value indicating the number of pixels each of which has an intensity value or a color difference value larger than the average, said second counter value indicating the number of pixels each of which has an intensity value or a color difference value smaller than the average;
counter value comparing means for comparing the first counter value and the second counter value; and
transforming means for transforming the intensity values or the color difference values of all pixels in the second area such that , when the value of the encryption data from said encryption generating means is the first value, said counter value comparing means gives a comparison result indicating that the first counter value is larger than the second counter value and such that, when the value of the encryption data from said encryption generating means is the second value, said counter value comparing means gives a comparison result indicating that the first counter value is smaller than the second counter value,

wherein the transformed signals are output as the watermarked image signals, the intensity value or the color difference value or each pixel in the second area of the transformed signals being transformed by said transforming means according to the value of the encryption data.

**3.** A digital watermarking method comprising:

a first step for specifying a predetermined area in which a digital watermark is to be embedded, said predetermined area being included in received image signals;
a second step for encrypting the digital watermark and for outputting encryption data; and
a third step for comparing an average of intensity values or color difference values of all pixels in a first area in the predetermined area in the received image signals with an intensity value or a color difference value of each pixel in a second area that is an area other than the first area in the predetermined area to find, for all pixels in the second area, a first counter value and a second counter value, said first counter value indicating a number of pixels each of which has an intensity value or a color difference value larger than the average, said second counter value indicating a number of pixels each of which has an intensity value or a color difference value smaller than the average, and
a fourth step for transforming the intensity value or the color difference value of each pixel in the second area such that a relation between the first counter value and the second counter value becomes a preset relation according to a first value or a second value of the encryption data and for outputting the received image signals as watermarked image signals.

**4.** The digital watermarking method according to claim 3, wherein said third step comprises:

a fifth step for calculating the average of the intensity values or the color difference values of the pixels in the first area in the predetermined area of the received image signals; and
a sixth step for comparing the average with the intensity value or the color difference value of each pixel in the second area that is an area other than the first area in the predetermined area to calculate, for all pixels in the second area, the first counter value and the second counter value, said first counter value indicating the number of pixels each of which has an intensity value or a color difference value larger than the average, said second counter value indicating the number of pixels each of which has an intensity value or a color difference value smaller than the average,
and wherein said fourth step comprises:

a seventh step for comparing the first counter value and the second counter value; and
an eighth step for transforming the intensity values or the color difference values of all pixels in the second area such that, when the value of the encryption data is the first value, a comparison result indicating that the first counter value is larger than the second counter value is obtained and such that, when the value of the encryption data is the second value, a comparison result indicating that the first counter value is smaller than the second counter value is obtained.

**5.** A digital watermark reproducing apparatus comprising:

area specifying means (4) for receiving digitally watermarked image signals as input signals and for specifying a predetermined area, said digitally watermarked image signals being generated by transforming signals in the predetermined area of the image signals according to a value of encryption data generated by encrypting a digital watermark;
extracting means (5) for comparing an average of intensity values or color difference values of all pixels in a first area in the predetermined area in the digitally watermarked image signals with an intensity value or a color difference value of each pixel in a second area that is an area other than the first area in the predetermined area to find, for all pixels in the second area, a first counter value and a second counter value, said first counter value indicating a number of pixels each of which has an intensity value or a color difference value larger than the average, said second counter value indicating a number of pixels each of which has an intensity value or a color difference value smaller than the average, and for extracting from the predetermined area the encryption data which is determined to be a first value or a second value according to a relation between the first counter value and the second counter value; and
a decrypting means (6) for decrypting the extracted the encryption data to an original watermark for output.

**6.** A digital watermark reproducing apparatus according to claim 5, wherein
said extracting means (5) comprises:

average calculating means for calculating the average of the intensity values or the color difference values of the pixels in the first area in the predetermined area of the digitally watermarked image signals;
counter value calculating means for comparing the average with the intensity value or the color difference value of each pixel in the second area that is an area other than the first area in the predetermined area to calculate, for all pixels in the second area, the first counter value and the second counter value, said first counter value indicating the number of pixels each of which has an intensity value or a color difference value larger than the average, said second counter value indicating the number of pixels each of which has an intensity value or a color difference value smaller than the average;
counter value comparing means for comparing the first counter value and the second counter value; and
encryption data extracting means for extracting the encryption data determined to be the first value when said counter value comparing means gives a comparison result indicating that the first counter value is larger than the second counter value or for extracting the encryption data determined to be the second value when said counter value comparing means gives a comparison result indicating that the first counter value is smaller than the second counter value.

**7.** A digital watermark reproducing method comprising:

a first step for receiving digitally watermarked image signals as input signals and for specifying a predetermined area, said digitally watermarked image signals being generated by transforming signals in the predetermined area of the image signals according to a value of encryption data generated by encrypting a digital watermark;
a second step for comparing an average of intensity values or color difference values of all pixels in a first area in the predetermined area in the digitally watermarked image signals with an intensity value or a color difference value of each pixel in a second area that is an area other than the first area in the predetermined area to find, for all pixels in the second area, a first counter value and a second counter value, said first counter value indicating a number of pixels each of which has an intensity value or a color difference value larger than the average, said second counter value indicating a number of pixels each of which has an intensity value or a color difference value smaller than the average;
a third step for extracting from the predetermined area the encryption data which is determined to be a first value or a second value according to a relation between the first counter value and the second counter value; and
a fourth step for decrypting the extracted encryption data to an original watermark for output.

**8.** A digital watermark reproducing method according to claim 7,
wherein said second step comprises:

a fifth step for calculating the average of the intensity values or the color difference values of the pixels in the first area in the predetermined area of the digitally watermarked image signals; and
a sixth step for comparing the average with the intensity value or the color difference value of each pixel in the second area that is an area other than the first area in the predetermined area to calculate, for all pixels in the second area, the first counter value and the second counter value, said first counter value indicating the number of pixels each of which has an intensity value or a color difference value larger than the average, said second counter value indicating the number of pixels each of which has an intensity value or a color difference value smaller than the average, and wherein said third step comprise:

a seventh step for comparing the first counter value and the second counter value; and
an eighth step for extracting the encryption data determined to be the first value when said seventh step gives a comparison result indicating that the first counter value is larger than the second counter value or for extracting the encryption data determined to be the second value when said seventh step gives a comparison result indicating that the first counter value is smaller than the second counter value.

FIG.1

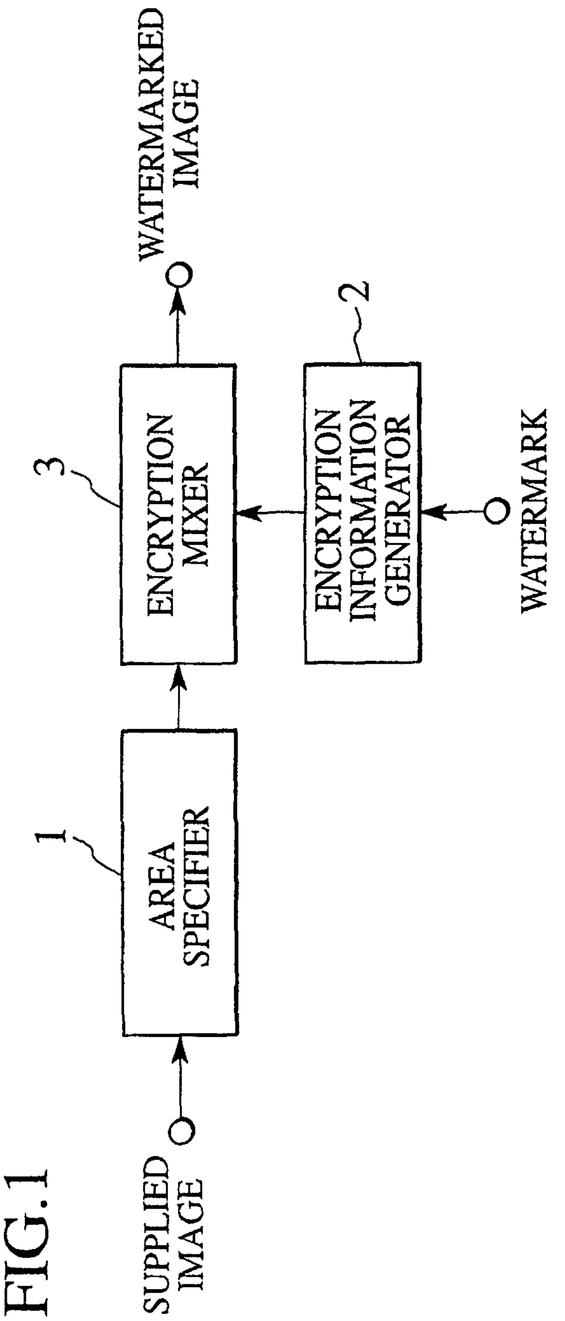
SUPPLIED IMAGE
1
AREA SPECIFIER
3
ENCRYPTION MIXER
WATERMARKED IMAGE
2
ENCRYPTION INFORMATION GENERATOR
WATERMARK

FIG.2

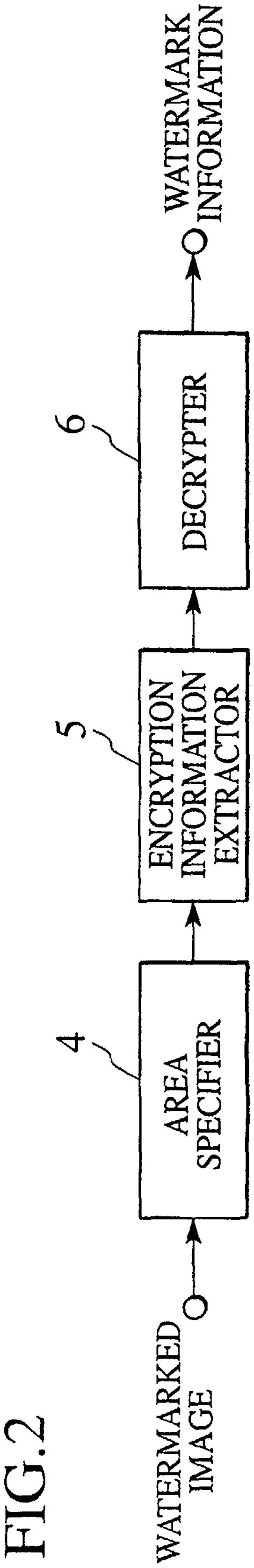
WATERMARKED IMAGE
4
AREA SPECIFIER
5
ENCRYPTION INFORMATION EXTRACTOR
6
DECRYPTER
WATERMARK INFORMATION

FIG.3